# EUROPEAN PATENT SPECIFICATION

(11) **EP 0 298 598 B1**
(45) Date of publication and mention of the grant of the patent: **29.11.1995**
(21) Application number: 88304989.2
(22) Date of filing: 01.06.1988
(51) Int. Cl.: H04J 14/02, H01S 3/133, H04B 10/14

(54) **Optical communication system with a stabilized group of frequencies**
Optisches Übertragungssystem mit Konstanthalten einer Frequenzgruppe
Système de communication optique utilisant un groupe stabilisé de fréquences

(30) Priority: 09.06.1987 US 59973
(43) Date of publication of application: 11.01.1989
(73) Proprietor: AT&T Corp., New York, NY 10013-2412 (US)
(72) Inventor: Glance, Bernard, Colts Neck New Jersey 07722 (US)
(74) Representative: Watts, Christopher Malcolm Kelway, Dr.

(56) References cited:
- WO-A-87/01874
- PROCEEDINGS OF THE THIRTY-SIXTH ANNUAL FREQUENCY CONTROL SYMPOSIUM, Philadelphia, Pennsylvania, 2nd - 4th June 1982, pages 327-337; M. OHTSU et al. : "Frequency stabilization of AlGaAs lasers"

## Description

### Field of the Invention

This invention relates to optical communications systems in which a group, or "comb", of intelligence-bearing-signals are frequency-division-multiplexed and stabilized.

### Background of the Invention

The use of optical frequencies to transmit intelligence-bearing-signals results in greatly increased information carrying capacity or bandwidth, and therefore greatly reduced transmission costs. This economic benefit has driven the development of optical communications over the past fifteen years. Various engineering advances continue to help realize the full bandwidth potential of optical communications systems (see WO-A-8 701 874).

One mode of optical communications which helps realize the bandwidth potential of such systems involves the frequency multiplexing of intelligence-bearing-signals in order to increase the realized bandwidth of the system. This frequency multiplexing is in many ways analogous to the frequency multiplexing which is well known in the field of radio transmission. In such multiplexing, known alternatively as frequency division multiplexing (FDM), or wavelength-division-multiplexing (WDM), different intelligence-bearing-signals are transmitted at different frequencies, thereby enhancing the information carrying capacity of the transmission system. See, for example, E. J. Backus et al, Electronics Letters, Vol. 22, No. 19, September 11, 1986, where, in addition, heterodyne techniques are used to receive the signals. However, in such a frequency-division-multiplexed system, the values of the various frequencies, which carry the different information-bearing signals, must not drift, if they are to remain separated from each other and not interfere. In radio transmission, this is most economically accomplished by using a highly stable frequency generator, usually frequency stabilized by a quartz crystal resonator. However, in the optical domain, such stable frequency generators are prohibitively expensive. Consequently, other techniques must be sought to maintain the frequency spacing between the various intelligence-bearing-signals which are multiplexed in an optical communication system.

Techniques have been suggested in the prior art for frequency stabilizing single optical frequencies. One of these techniques involves transmission through a Fabry-Perot resonator, or cavity, referred to here as a "Fabry-Perot". In such a system, a resonance line of the Fabry-Perot is used, in conjunction with a feedback circuit, to stabilize the frequency source, usually a laser. Exemplary of such stabilization techniques is the article by K.W.Cobb et al., Electronics Letters, Vol. 18, No. 8, page 336, April 15, 1982, and Tot Okashi et al, Electronics Letters, Vol. 16, No. 5, page 180, February 1980. A similar technique using light reflected by a Fabry-Perot is reported by Sollberger et al in The Journal of Lightwave Technology, Vol. LT-5, No. 4, page 485, April 1987. However, the stabilization of a single frequency does not alleviate the problem of signal interference because signal interference still results due to the drift of the other, non-stabilized, frequencies. Additionally, even if all of the frequencies are stabilized by their own individual Fabry-Perots, the problem of signal interference still remains because of the drift associated with the Fabry-Perots themselves.

A technique for stabilizing a number of different optical frequencies has been suggested by D.J.Hunkin et al in Electronics Letters, Vol.22, No.7, page 388, March 27, 1986. In this technique, referred to as the "injection locking technique", a group of equally spaced frequencies is generated by frequency modulating a laser with an appropriate tone. The resultant equally spaced sidebands are used to stabilize a number of different optical frequencies. However, there is no simple feedback mechanism to effectively prevent the optical frequencies, which are to be stabilized, from "unlocking".

### Summary of the Invention

The invention as claimed provides for frequency stabilizing a series of spaced, intelligence-bearing, optical frequencies using the resonant characteristics of a Fabry-Perot cavity. Use is made of the fact that there exists a group, or comb, of spaced resonances characteristic of Fabry-Perot cavities, which can be associated with an analogous comb of "spaced" intelligence-bearing signal-frequencies. The recognition of this analogy, between the spaced resonances of Fabry-Perot cavities and the spaced intelligence-bearing signal-frequencies, permits one to use Fabry-Perot cavities to stabilize the comb of intelligence-bearing signal-frequencies. The stabilization is effected through the use of appropriate feedback loops.

Each source of optical frequencies is locked to its own dedicated Fabry-Perot cavity. The various Fabry-Perot cavities associated with respective optical frequencies are then locked relative to one another, at least to the extent that they are prevented from drifting relative to one another. In this way, the individual frequencies, which consistute the comb of intelligence-bearing signals, are stabilized, which prevents them from drifting and interfering with each other. This particular embodiment is especially useful where the various optical sources, which generate the intelligence-bearing frequencies, are separated physically from each other.

### Brief Description of the Drawing

Some embodiments of the invention will be described in detail in terms of specific representations shown in the attached figures. The figures are described in brief as follows:
FIG. 1 is an abbreviated schematic representation of an embodiment of the invention which involves the locking of each source to its own dedicated Fabry-Perot cavity;
FIG.2 is a schematic representation of a frequency division multiplex circuit utilizing heterodyne detection;
FIG. 3 is a frequency representation of the heterodyne process;
FIG. 4 is a further frequency representation of the heterodyne process;
FIG. 5 is a representation of signals which are detected in the heterodyne receiver shown in FIG. 2;
FIG. 6 is a graphical representation of the received power versus the bit error rate for the heterodyne receiver shown in FIG. 2;
FIGS. 7 and 8 are representations of eye patterns for signals received using the circuit of FIG.2;
FIG. 9 is the measured IF spectrum for the device of FIG. 2, where the channel spacing is intentionally reduced in order to determine co-channel interference;
FIG. 10 is a detailed circuit schematic of the embodiment of the invention in which each source of optical frequency is locked to its own dedicated Fabry-Perot cavity;
FIG. 11 is a detailed circuit schematic of the embodiment of FIG. 10 further including redundant reference frequency generators;
FIG. 12 is a detailed circuit schematic of the embodiment of FIG. 10 including circuitry which permits the user to select a particular optical frequency;

### Detailed Description

The apparatus to be described involves the stabilization of a comb of intelligence-bearing frequency-multiplexed signal-frequencies using the resonances of a Fabry-Perot cavity. The multiplexed signal, will have been modulated at a frequency which may be representative of intelligence, and which is referred to here as a dithering frequency. The stablilization is effected through the use of at least two appropriate feedback loops. Separate error signals, associated with the drifts of at least two signals which have been multiplexed, and transmitted through the Fabry-Perot, are independently generated by mixing the dithering component of the multiplexed signals with the corresponding dithering frequencies.

The multiplexed signals are intelligence-bearing signals, including signals which are inserted, for example, for references purposes only, and carry no further intelligence. The term "dithering" refers to the modulation of any appropriate frequency. The dithering is effected in order to superimpose an intelligence-bearing signal on the frequency in question, either as in classical modulation, or for correlation purposes, associated with subsequent generation of an error signal. In certain embodiments the dithering may be effected to simultaneously superimpose a classical intelligence-bearing signal on the frequency in question, and for the subsequent correlation purposes.

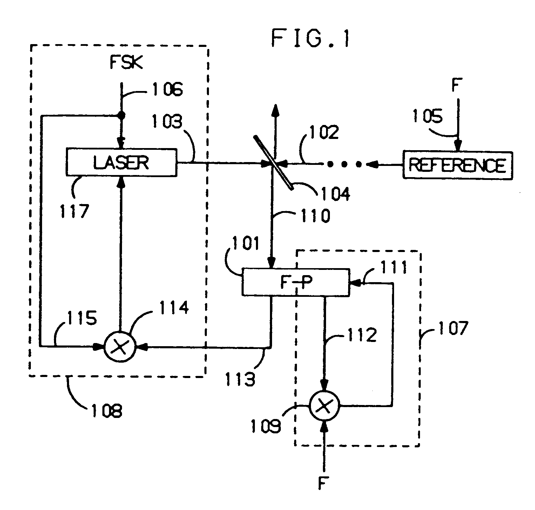

A specific embodiment of the invention is shown in general schematic form in FIG 1, which is discussed in general here, and more specifically immediately below. Each source of optical frequency, of which 117 is an example, is locked to its own dedicated Fabry-Perot. The various Fabry-Perot cavities associated with each optical frequency are then locked relative to one another, at least to the extent that they are prevented from drifting relative to one another. This locking is effected by the use of a reference signal.

The Fabry-Perots are tunable in order to adjust their relative alignment. The alignment need only be sufficiently accurate to ensure that given number of resonances may be associated with an equivalent number of intelligence-bearing signals. However, other resonances, may not uniquely be associated with intelligence-bearing signals.

Each source of optical frequencies is locked to its own dedicated Fabry-Perot. In FIG. 1, the Fabry-Perot is identified as 101. One source of optical frequency is 117. Only one such source is shown, although any number may be used, each with its own feedback loop 108. A reference signal 102 is combined, or multiplexed, with an intelligence-bearing signal 103 by means of an appropriate coupler 104 so that both signals are transmitted to the Fabry-Perot. The coupler may be selected to transmit only a portion of the reference and information-bearing signals to the Fabry-Perot, so that another portion of the signals may be transmitted, for example, to a user. The reference frequency is modulated with a dithering frequency, F(105), which, in this embodiment, carries no other intelligence, while intelligence-bearing frequency 103 is modulated, or dithered, in accordance with appropriate intelligence using, for example, a frequency shift keying (FSK) technique, 106.

The multiplexed signals, after leaving the Fabry-Perot at 112 and 113, are fed to two separate feedback loops 107 and 108 so as to stabilize the Fabry-Perot and the laser, respectively. In the Fabry-Perot feedback loop, the dithered component of the multiplexed signals 112, in the form of transmitted resonances of the Fabry-Perot which may be detected by a photodetector are fed to one input of a mixer 109. The dithering frequency 105 is fed to another input of the mixer. The mixer correlates the two inputs, thereby generating an error signal which is proportional to the drift of a selected resonance of the Fabry-Perot. This error signal, 111, is then fed back to the Fabry-Perot tuner 118, in order to appropriately adjust it, thereby frequency locking the resonance to the reference signal.

In the second feedback loop, 108, the laser frequency is stabilized. In this feedback loop, the dithered component of the multiplexed signals, which may be detected by a photodetector, after leaving the Fabry-Perot, are fed to one input of a mixer 114. The FSK frequency is fed to the other input of the mixer, 115. The mixer correlates the two inputs, thereby generating an error signal which is proportional to the drift of the laser relative to a selected resonance of the Fabry-Perot. The resultant error signal is then fed back to the laser in order to appropriately adjust it, thereby frequency locking the laser to the selected resonance of the Fabry-Perot.

While this particular embodiment shows the reference frequency being dithered at 105 before it is transmitted, more general embodiments may involve reference frequencies which are transmitted undithered and which are only dithered locally for the purposes of signal processing in conjunction with the production of an error signal.

Throughout the description of this invention the term "optical" as used, for example, in "optical frequencies", or "optical communication systems", refers to a range of frequencies in the electromagnetic spectrum which may be transmitted efficiently through fibers, generally referred to as "optical fibers", and generally comprising dielectric materials. "Optical" frequencies will usually occur in the wavelength range of 0.3 to 2 or 3 microns. However, new materials may permit transmission of higher or lower frequencies through such fibers, and in such event such frequencies would also be included in the term "optical" as used here. The term "Fabry-Perot", and the device it represents, are well known to those skilled in optics.

### A. The FDM Coherent Optical Star Methodology

The apparatus involves the detection of frequency-division-multiplexed (FDM) signals. Various general methodologies exist for the transmission and processing of such signals. The invention, while not limited to any one such methodology, is most easily explained in terms of an exemplary methodology. For convenience, the following discussion is in terms of the "coherent" (i.e., heterodyne detection) "optical star" technique. See, for example, E.J. Bachus et al, Electronics Letters, September 1986, Vol. 22, No. 19, pp. 1002-1003, A.R. Chraplyvy et al, Electronics Letters, September 1986, Vol.22. No. 20, pp. 1084-1085, and R.A. Linke, OFC Sixth International Conference, Reno, 19-22, January 1987, Technical Digest, pp. 184.

While FDM allows use of the wide bandwidth available in optical communication systems, coherent (heterodyne) detection yields high-receiver sensitivity and high-frequency selectivity, and the star configuration yields efficient distribution of optical power through the network. By combining these three features, an optical network is obtained which can provide a large throughput (i.e. number of users x bit rate).

### 1. Description of a Specific Circuit Configuration

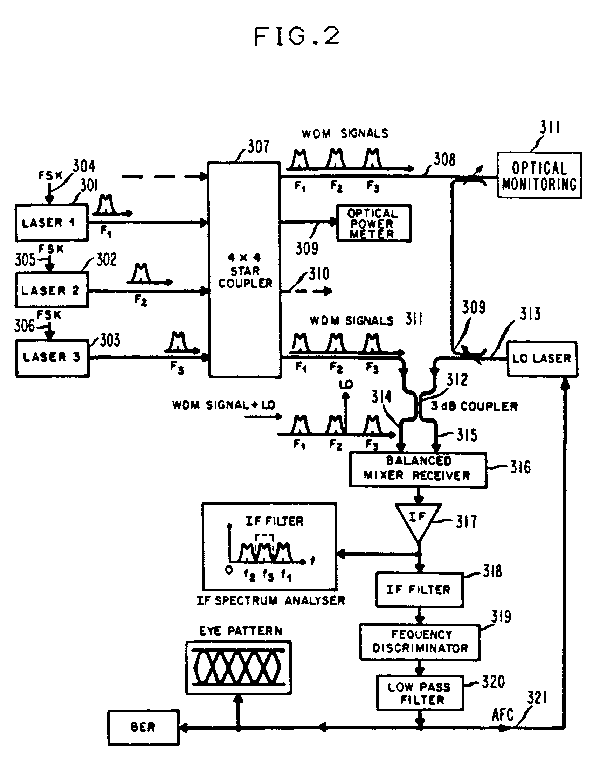

Fig. 2 is a schematic representation of a specific circuit configuration which makes use of the FDM coherent optical star methodology. The optical sources used for transmission, 301, 302, and 303, are fast, frequency-tunable, external cavity lasers. See, for example, B. Glance et al Electronics Letters, January 1987, Vol. 23, No. 3, pp 98-99. These lasers provide a narrow-line, single-frequency signal at 1.28 »m, which can be frequency-tuned over about 4000 GHz as well as frequency-modulated up to 100 MHz. Modulation of the sources at 304, 305, and 306, is done by FSK at 45 Mb/s, with a modulation index of about one, by a random NRZ bit stream with 2¹⁵-1 pattern length. The three sources transmit at optical frequencies spaced by a frequency interval of 300 MHz.

The three optical signals are combined by a 4x4 fiber star coupler, 307. Each of 4 output fibers of the coupler, 308, 309, 310, and 311, carries the three FDM signals. The signal from one of these fibers is combined by means of a 3 dB fiber coupler, 312, with the LO signal, 313, provided by a conventional external-cavity laser. See, for example, R. Wyatt et al, Electronics Letters, February 1983, Vol. 19, No. 3, pp. 110-112. The polarization of the transmitted signals is manually adjusted to match the polarization state of the LO signal. The combined signals from the two outputs of the coupler, 314 and 315, feed a balanced-mixer receiver, 316, see, for example, B. L. Kasper et al, Electronics Letters, April 1986, Vol. 22, No. 8, pp. 413-415, which heterodynes the received signal to an IF frequency of 225 MHz. The optical power of the LO signal at the photodetectors, is about 0.7 dBm. As a result, the shot noise due to the LO signal dominates the thermal noise of the receiver. The use of a balanced-mixer is important in a FDM star network to eliminate the interference arising from the direct detection terms. It also allows a more efficient use of the optical power of the LO source, and thus reduces the degradation caused by the shot noise originating from the received signal. (In a FDM star network, the shot noise caused by the received FDM signal is equal to the shot noise due to one transmitting optical source minus the excess loss of the network).

The IF signal is amplified at 317 and then filtered by an IF filter 318 which is 60 MHz wide and centered at 225 MHz. Demodulation is accomplished by a frequency discriminator, and the resulting baseband signal is filtered by a low-pass filter having a 3 dB cut-off of 35 MHz. Selection of the desired channel is achieved by tuning the LO frequency to the value that centers the wanted channel within the bandwidth of the IF filter. The resulting IF is maintained by an Automatic Frequency Control (AFC) circuit, 321, controlling the optical frequency of the LO signal.

The signal from one, 308, of the three remaining output fibers from the star coupler, is used after combining with a fraction of the LO signal at 309 and 310, to monitor the four optical signals, the three FDM signals, and the LO signal at 311. This is done using a spectrometer and a scanning Fabry-Perot etalon. Another output fiber is utilized to measure the received signal. The measurement takes into account the slight difference of received signal between this fiber and the fiber connected to the receiver.

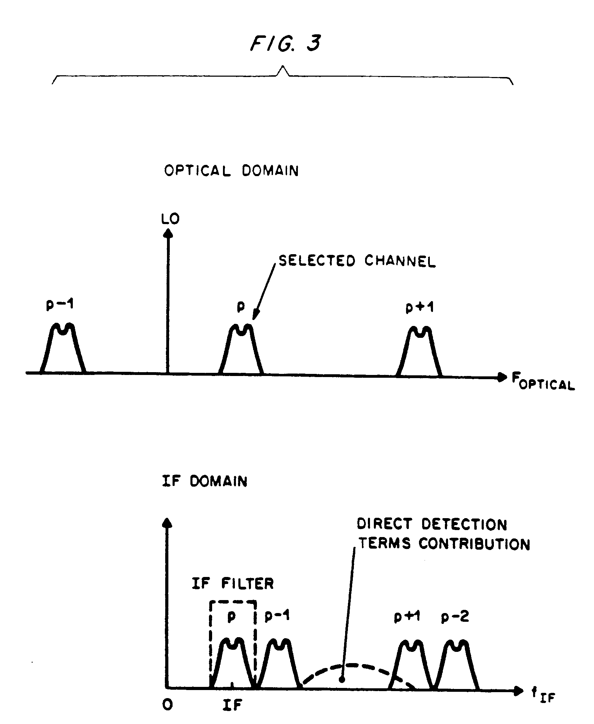

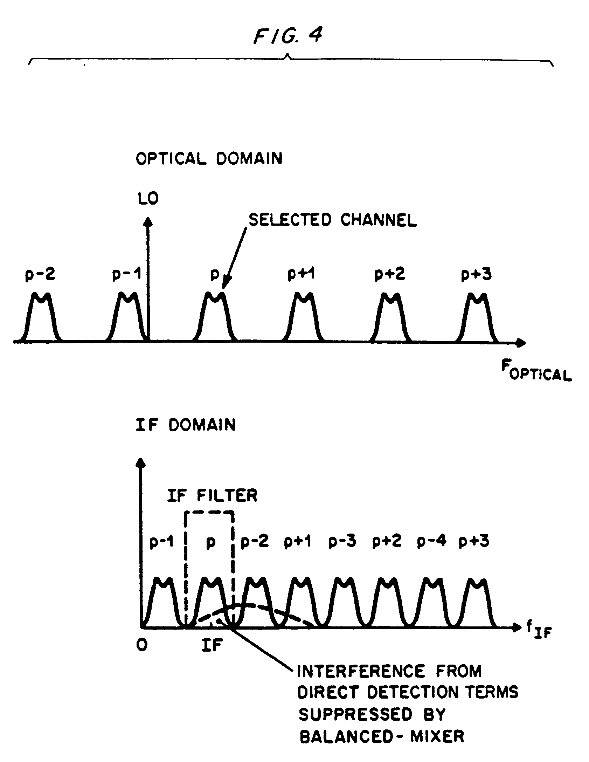

For a given bit rate, the system throughput depends on the number of channels which can be multiplexed in the available optical bandwidth. However, this bandwidth is much larger than any feasible IF and therefore the LO frequency must be positioned near the desired channel, See, for example, L. G. Kazovsky, OFC Sixth International Conference, Reno, 19-22, January 1987, Technical Digest, pp.59-60. In addition, an optical mixer is equally sensitive to inputs above and below the LO frequency. As a result the channel spacing must be large enough to avoid interference from the image frequency. Such a heterodyne process interleaves in the IF domain the channels on the low-frequency side of the LO signal with the channels on the high- frequency side of this signal. The situation is improved through the use of an image rejection mixer(see, for example, B. Glance, Journal of Lightwave Technology, November 1986, Vol. LT-4, No. 11, pp. 1722-1725,)but this requires a more complicated receiver. Consequently, the channels are spaced closer in the IF domain (see FIG. 3). The minimum achievable channel spacing varies proportionately with the value of the IF frequency when the lowest IF channel is selected by the IF filter. As a result, a large channel spacing is needed since the IF frequency must be well above the baseband to avoid interference between the IF selected signal and the resulting demodulated signal. These two problems can be resolved conjointly by selecting the second lowest IF channel (see FIG. 4). The result is obtained by tuning the LO frequency at the edge of the optical channel adjacent to the selected channel. But in this case, the selected IF channel is interfered by the direct detection terms arising from the frequency beat between adjacent optical channels (for FSK modulation, interference from direct detection terms arises mainly from frequency beat between adjacent optical channels). This interference can be significant in a star network, where the optical power of the received FDM signals can be comparable to that of the LO signal. However, this interference can be suppressed (the amount of suppression depends on the degree of balancing) by using a balanced-mixer receiver. See, for example, L. G. Kazovsky, OFC Sixth International Conference Reno, 19-22, January 1987, Technical Digest, pp. 59-60. The minimum channel spacing, and thus the system throughput, is then determined by the channel spacing preventing co-channel interference in the IF domain. See, for example, Y. K. Park et al, OFC Sixth-International Conference, Reno, 19-22 January 1987, Post Deadline Paper PDT-13.

### a. IF Channel Selection

In order to operate at an IF frequency above the frequency of the baseband signal, the desired optical channel is heterodyned by an LO signal which is tuned to the edge of an adjacent optical channel. Thus, the channel selected by the IF filter is the second lowest IF channel. This arrangement minimizes the frequency spacing needed between optical channels and separates the demodulated baseband signal from its IF signal. For a modulation rate of 45 Mb/s, the minimum optical frequency spacing preventing co-channel interference in the IF domain is about 260 MHz. To provide a protective margin, we selected a channel spacing of 300 MHz. The resulting frequency spacing between the interleaved IF channels is 150 MHz.

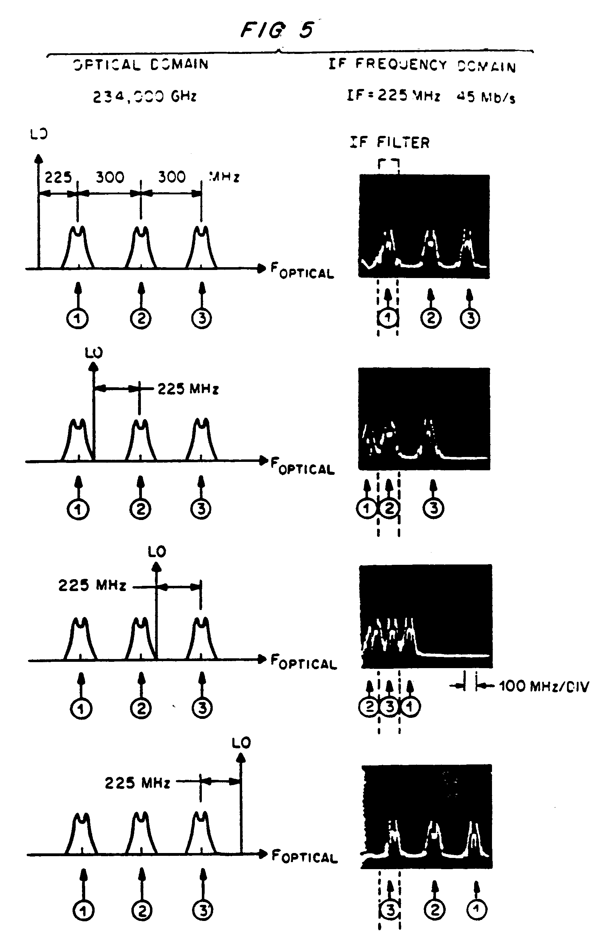

These results are illustrated in FIG. 5, which shows the IF power spectra of the three channels, heterodyned from an optical frequency of about 234,000 GHz, and selected successively by the IF filter centered at 225 MHz. The three first cases show the selection, respectively, of channel #1, channel #2 and channel #3. In this case, channel #3 is interleaved between two adjacent channels spaced at 150 MHz as would occur in a system having a large number of channels. The fourth case shows the selection of channel #3 for a LO frequency tuning yielding the reversed IF channel distribution as compared to the distribution given by the selection of channel #1. Opposite to each IF channel spectrum distribution is illustrated the corresponding power spectra of the optical signals and the frequency position of the LO signal yielding the resulting IF spectra. With more than 3 channels, there would be no further channel interference since only the two channels adjacent to the selected IF channel give rise to co-channel interference.

### b. Receiver Sensitivity Measurement

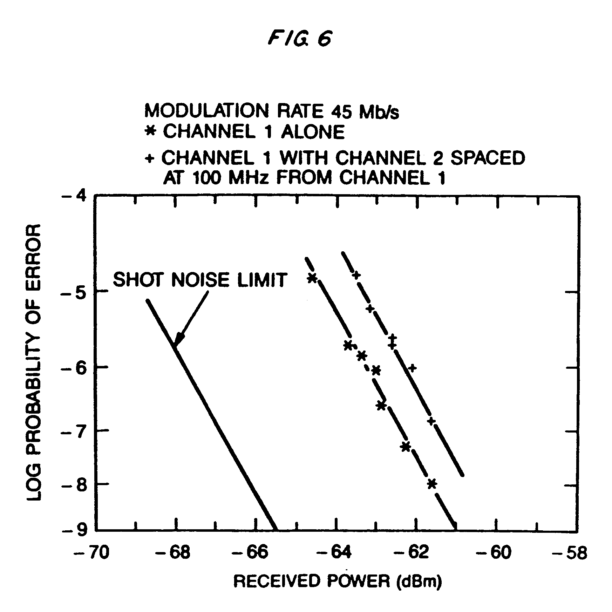

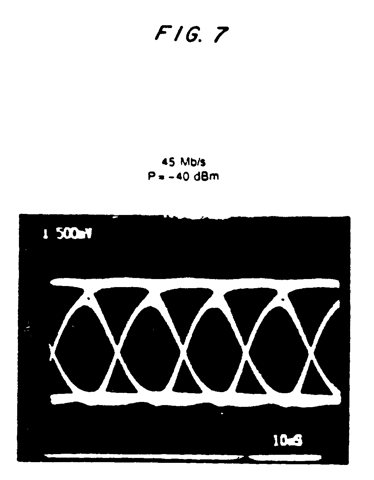

For one channel, the minimum received optical power needed to obtain a BER of 10⁻⁸ is -61.6 dBm (FIG. 6). Extrapolating this result to a BER of 10⁻⁹ yields a received optical power of -61 dBm. This result corresponds to the actual optical power received at the output of the 4X4 optical star coupler. It does not include the additional excess loss due to the 3 dB coupler and the fiber connectors, which amounts to about 0.2 dB. Expressed in terms of the averaged number of photons/bit, the receiver sensitivity is 113 photons/bits, which is 4.5 dB from the shot noise limit of an ideal FSK optical receiver. The 4.5 dB degradation includes a 1 dB penalty due to the mismatch of the laser modulation port, which was designed for dc bias only. The mismatch causes a 20 percent closure of the eye pattern in absence of system noise (FIG. 7).

### c. Co-Channel Interference Measurement

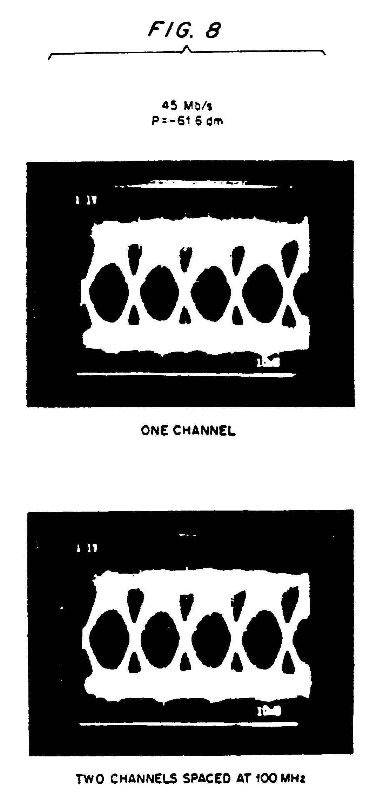

Channel spacing may be deliberately reduced in order to determine co-channel interference. The power penalty caused by co-channel interference is 1 dB when the selected channel is interfered in the IF domain by a second channel spaced by 100 MHz, received with the same optical power and modulated at the same bit rate of 45 Mb/s but with a different random bit stream. This result is shown in FIG. 6, which displays the measured BER versus the received power for one channel alone, and the similar result obtained when the channel is interfered by a second channel spaced by 100 MHz in the IF domain. The eye patterns measured for these two cases are shown in FIG. 8 for a received optical power of -61.6 dBm.

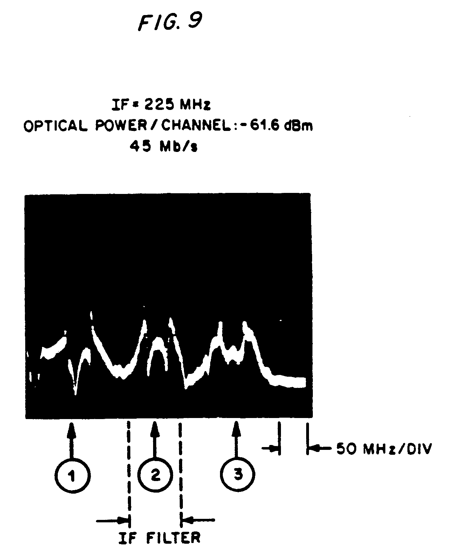

The co-channel interference increases very fast when the frequency spacing is reduced to 90 MHz. It completely disappears when the frequency spacing is increased to 130 MHz. Similarly, no co-channel degradation is observed when the selected channel is interleaved by two adjacent channels spaced by 150 MHz. Figure 9 shows the measured IF spectrum from this case, where each of the three channels is received at a level of -61.6 dBm and is modulated at 45 Mb/s.

### d. System Throughput

The system throughput can be estimated from the above results for a network operating at the wavelength of 1.55 »m. For example, let us assume that a user transmits 0 dBm of optical power into his fiber connected to a star coupler interconnecting 2¹⁷ subscribers. The excess loss suffered by a signal propagating through the star coupler is proportional to the 17 stages of 3 dB couplers constituting the star. Since commercially available 3 dB couplers have about 0.1 dB excess loss, such a star coupler will introduce an excess loss of about 2 dB. Adding 4 dB of fiber loss for a network having a 10 km radius yields -57.2 dBm of optical power received by each subscriber from the signal transmitted by the above user. This received power is 3.8 dB larger than that measured to obtain a BER of 10⁻⁹ for a modulation rate of 45 Mb/s. Therefore, the above results indicate that 100,000 users transmitting at this bit rate can be interconnected within a radius of 10 km by a FDM coherent star network, provided that the lasers can be tuned over the frequency range filled by the FDM channels. A throughput comparable to this value (4500 Gb/s user) may be achieved for a smaller number of users operating at a higher bit rate.

### B. Stabilization Using A Fabry Perot for Each Frequency Source

As discussed, an optical network using FDM and heterodyne detection techniques can provide the capability of interconnecting a very large number of subscribers. However, such a system requires that the frequency interval between the optical carriers be controlled in order to avoid collision between the optical signals. In a radio system, this problem is solved by assigning a fixed frequency to each carrier controlled by a highly stable frequency source. Such an approach will be very difficult and expensive to implement in an optical FDM communication system, especially if the frequencies of the optical sources must be spaced at small frequency intervals (hundreds of MHz to several GHz).

A simpler solution to this problem is achievable by maintaining constant the frequency spacing between optical signals and allowing the set of frequencies drift together. Heterodyne reception of a slowly drifting signal is easily accommodated by an Automatic Frequency Control (AFC) circuit in the receiver. This section discusses the stabilization of each frequency through the use of a Fabry-Perot with each frequency source or subscriber station. The resonances of the Fabry-Perot define a set of frequencies, the same for all the users, from which each subscriber can select a resonance to lock his optical carrier. The circuit providing this result is, for simplicity, first described with all the subscribers' Fabry-Perots frequency-locked to one reference signal. A more reliable circuit is then discussed which uses two reference signals. Finally, a technique is discussed which allows the subscriber to select an optical frequency without interfering with the network.

### 1. Description of a Circuit Using One Reference Signal

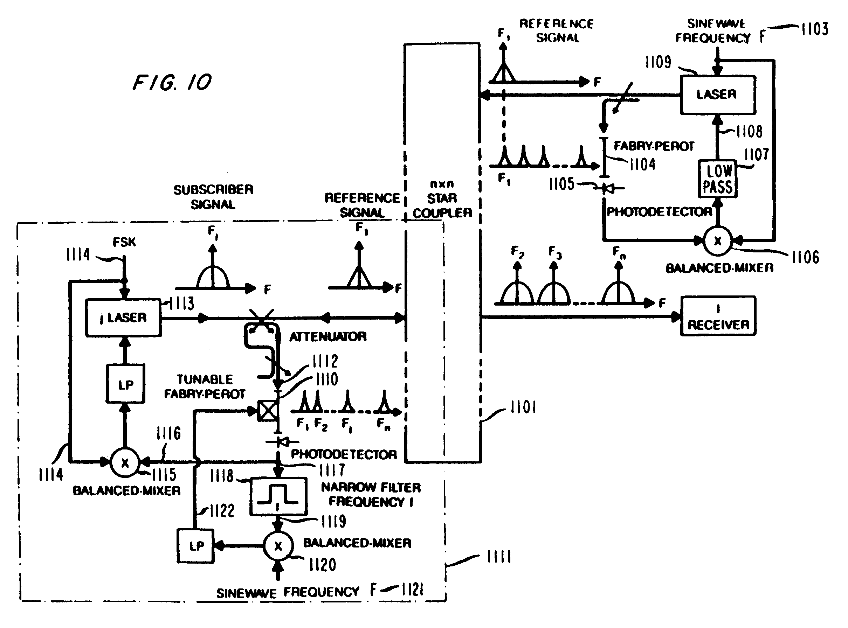

An embodiment of the invention shown in FIG. 10 consists of an optical star coupler 1101 connecting each subscriber by two fibers. One fiber is used for transmission; the other fiber is utilized for signal reception. Each subscriber transmits on a different optical frequency. Its signal is divided equally among all the receiving fibers. Therefore, each subscriber receives a fraction of every transmitted signal including his own. The system assumes the use of single-frequency sources which can be tuned as well as frequency modulated. The modulation is done by Frequency-Shift Keying (FSK).

One optical source 1109 is frequency-modulated by a sinewave (cw) signal, F, 1103. A fraction of the optical signal transmitted by this source is fed into an optical fiber Fabry-Perot 1104. See, for example, J. Stone, Electronics Letters, Vol. 21, No. 11, pp. 504-505, May 23, 1985, and J. Stone et al, Journal of Lightwave Technology, Vol. LT-4, No. 4, pp. 382-385, April 1986. A photodiode 1105 detects the output signal of the Fabry-Perot. The resulting signal is mixed at 1106 with the cw signal applied to the laser. This provides, after filtering at 1107, an error signal 1108 which locks the frequency of the laser to one of the resonances of the Fabry-Perot 1104, which is then defined, for example, to be the lowest frequency of the set of frequencies used by the system. See, for example, R. V. Pound, Radiation Laboratory Series 16, pp. 342-343. This reference line is used throughout the network to stabilize a Fabry-Perot 1110 at each subscriber station.

Each of the subscribers have the same frequency-locking circuit 1111 in which the optical signal 1112 feeding the Fabry-Perot includes a fraction of the reference signal 1112. In addition, the frequency dithering of the optical source 1113 is done by the FSK modulating signal 1114. See, for example, R. V. Pound, Radiation Laboratory Series 16, pp. 342-343. The subscriber selects a resonance of his Fabry-Perot to frequency-lock its optical source. In this case, the error signal is obtained by mixing at 1115 a fraction of the photodetected signal 1116 with the FSK modulating signal 1114.

The other fraction of the photodetected signal 1117 is filtered by a narrow filter 1118 centered at the frequency of the cw signal defined previously. The filtering process recovers the cw signal originating from the reference signal. This filtered signal 1119 is mixed at 1120 with the same cw signal 1121 supplied (the cw signal can be obtained from a local radio station), to all the subscribers. This yields, after integration, an error signal 1122 (the phase of the local cw signal is adjusted to provide the maximum error signal with the right polarity) which frequency-locks, by means of a piezo-electric device, the Fabry-Perot of the subscriber to the reference signal. See, for example, J.Stone et al, Electronics Letter, Vol. 21, No. 11, pp. 504-505, May 23, 1985. This process is started by applying a variable voltage to tune the Fabry-Perot in the pull-in range of the reference frequency. One assumes that the Fabry-Perot have the same length within a tolerance such that the set of frequencies used for the network differs, between Fabry-Perots, by a small fraction of a free-spectral range over the total system bandwidth.

### 2. Description of a Circuit Using Two Reference Signals

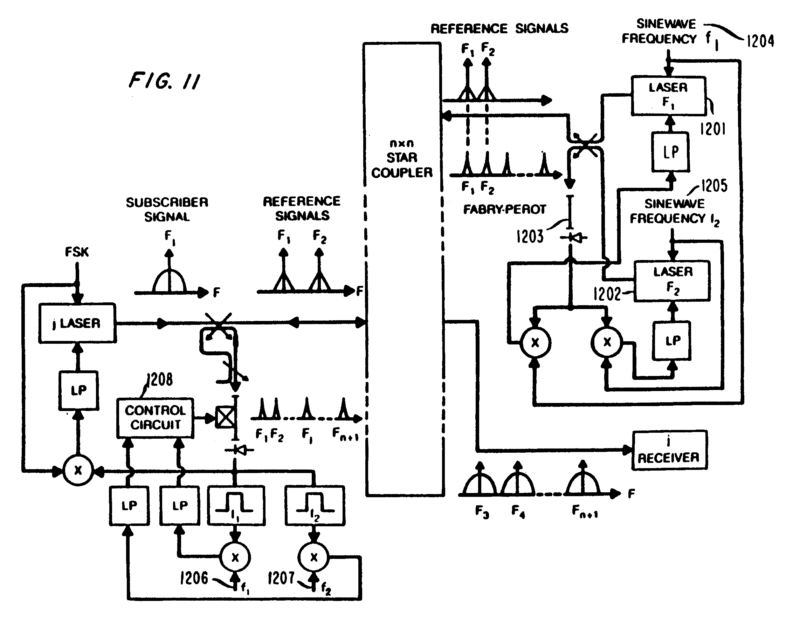

In the case of a failure of the reference source the FDM network will fail if the system relies on an unique reference signal. This problem can be avoided, as shown in FIG. 11, by using two reference signals 1201 and 1202, each frequency-locked to one of the resonances of a Fabry-Perot 1203 as shown in FIG. 11. The reference signals are frequency-modulated by a sinewave of frequency f₁ and f₂, 1204 and 1205, respectively. These two sinewaves are provided locally to each subscriber at 1206 and 1207, and thus two error signals, originating from the two reference signals, can be detected independently. A control circuit 1208 measures the presence of the two error signals and uses one of them to frequency-lock the subscriber's Fabry-Perot. The absence of one of the error signals is used to indicate a failure of the corresponding reference signal. Action can thus be taken to correct the problem without interruption of the system.

### 3. Frequency Selection Process

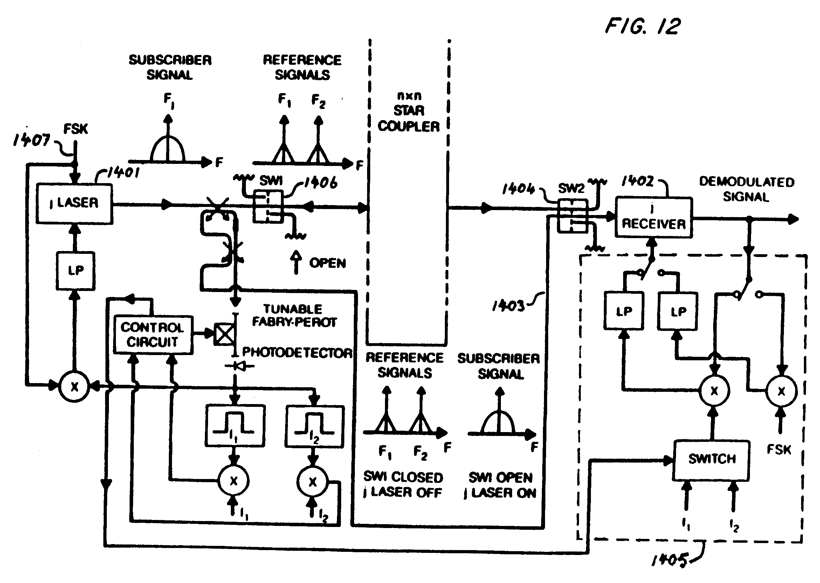

The process which allows a subscriber to select a desired optical frequency must be achieved without interfering with the signal received by the other users. To obtain this result, one may use the circuit of FIG. 12. In using this circuit, the subscriber turns-off his laser 1401 and with 1404 switches his receiver 1402 to a fiber 1403 connected to the frequency-stabilization circuit. Then the receiver, 1402 is tuned to detect the cw signal transmitted by the reference source. This process can be done electronically by a circuit 1405 which compares the demodulated signal to the local cw signal. The subscriber then sequentially disconnects his transmitting fiber from the network using 1406, turns on his optical source 1401 and tunes the frequency of his source until the receiver 1402 detects his own FSK modulating signal 1407. This is done by using the electronic process 1405 described above except that the demodulated signal is now compared to the subscriber's modulating signal 1407.

The subscriber's laser 1401 is now tuned to the frequency of the reference signal. This reference is the one controlling the system, in case of failure of this source, the frequency selection process uses the other reference signal. Starting from this frequency, the subscriber selects the desired frequency by tuning his optical source through the comb of resonances of his Fabry-Perot, counting the number of zero-crossing given by the error signal of his frequency-locking circuit. The frequency selection process is thus done without interfering with the signal received by the other users. After completion of this process, the subscriber connects back his transmitting fiber to the network using 1406 and his receiving fiber to his receiver using 1404.

## Claims

1. An optical communication system for processing at least two frequency-multiplexed, modulated optical signals, comprising:
a plurality of optical sources (1113) for providing an optical signal at a plurality of predetermined wavelengths;
CHARACTERIZED BY:
a plurality of tunable Fabry-Perot cavities (1110) having cavity resonances at the predetermined wavelengths, each Fabry-Perot cavity being associated with a different one of the optical sources;
means (1101, 1103, 1105-1109) for applying a reference signal to each of the Fabry-Perot cavities;
a feedback loop (1117-1122) associated with each of the Fabry-Perot cavities to generate an error signal proportional to the drift of a selected resonance of the respective Fabry-Perot cavity from the reference signal;
means for adjusting the respective Fabry-Perot cavity in response to the error signal so as to frequency lock the selected resonance of the respective Fabry-Perot cavity to the reference signal; and
means for tuning the respective optical source (1113) to a different selected resonance of the respective Fabry-Perot cavity.

2. The communication system of claim 1 wherein the reference signal is modulated with a dithering frequency.

3. The communication system of claim 1 wherein the reference signal is transmitted undithered.

## Patentansprüche

1. Optische Kommunikationsanlage für die Verarbeitung von wenigstens zwei frequenzmultiplexierten, modulierten optischen Signalen mit
einer Vielzahl von optischen Quellen (11, 13) zur Bereitstellung eines optischen Signals mit einer Vielzahl von vorbestimmten Wellenlängen,
gekennzeichnet durch
eine Vielzahl von abstimmbaren Fabry-Perot-Resonatoren (1110) mit Resonanzen bei den vorbestimmten Wellenlängen, wobei jeder Fabry-Perot-Resonator einer anderen optischen Quelle zugeordnet ist,
eine Einrichtung (1101, 1103, 1105-1109) zum Anlegen eines Bezugssignals an jeden Fabry-Perot-Resonator,
eine jedem Fabry-Perot-Resonator zugeordnete Rückkopplungsschleife (1117-1122) zur Erzeugung eines Fehlersignals, das der Drift einer gewählten Resonanz des jeweiligen Fabry-Perot-Resonators von dem Bezugssignal proportional ist,
eine Einrichtung zur Einstellung des jeweiligen Fabry-Perot-Resonators unter Ansprechen auf das Fehlersignal, um die gewählte Resonanz des jeweiligen Fabry-Perot-Resonators frequenzmäßig auf das Bezugssignal einrasten zu lassen, und
eine Einrichtung zur Abstimmung der jeweiligen optischen Quelle (1113) auf eine andere gewählte Resonanz des jeweiligen Fabry-Perot-Resonators.

2. Kommunikationsanlage nach Anspruch 1,
bei der das Bezugssignal mit einer Zitterfrequenz moduliert ist.

3. Kommunikationsanlage nach Anspruch 1,
bei der das Bezugssignal ohne Zittern übertragen wird.

## Revendications

1. Un système de communication optique pour traiter au moins deux signaux optiques modulés, multiplexés en fréquence, comprenant :
un ensemble de sources optiques (1113) pour produire un signal optique à un ensemble de longueurs d'onde prédéterminées;
CARACTERISE PAR
un ensemble de cavités de Fabry-Pérot accordables (1110) ayant des résonances de cavité aux longueurs d'onde prédéterminées, chaque cavité de Fabry-Pérot étant associée à l'une différente des sources optiques;
des moyens (1101, 1103, 1105-1109) pour appliquer un signal de référence à chacune des cavités de Fabry-Pérot;
une boucle d'asservissement (1117-1122) associée à chacune des cavités de Fabry-Pérot pour générer un signal d'erreur proportionnel à la dérive d'une résonance sélectionnée de la cavité de Fabry-Pérot respective, par rapport au signal de référence;
des moyens pour ajuster la cavité de Fabry-Pérot respective sous la dépendance du signal d'erreur, de façon à verrouiller en fréquence la résonance sélectionnée de la cavité de Fabry-Pérot respective sur le signal de référence; et
des moyens pour accorder la source optique respective (1113) sur une résonance sélectionnée différente de la cavité de Fabry-Pérot respective.

2. Le système de communication de la revendication 1, dans lequel le signal de référence est modulé avec une fréquence de modulation.

3. Le système de communication de la revendication 1, dans lequel le signal de référence est émis sans être modulé.
